# EUROPÄISCHE PATENTANMELDUNG

(11) **EP 1 118 445 A2**
(43) Veröffentlichungstag der Anmeldung: **25.07.2001**
(21) Anmeldenummer: 01100347.2
(22) Anmeldetag: 05.01.2001
(51) Int. Cl.: B29C 44/12

(54) **Verfahren und Vorrichtung zum Herstellen von Fahrzeuginnenteilen aus Kunststoff**

(30) Priorität: 19.01.2000 DE 10002191
(71) Anmelder: Heidel GmbH & Co. KG, D-49504 Lotte (DE)
(72) Erfinder: Köntges, Gerhard, 49076 Osnabrück (DE)
(74) Vertreter: von Raffay, Vincenz, Dipl.-Ing.

(57) **Zusammenfassung**

Das Verfahren zum Herstellen von Fahrzeuginnenteilen mit einem Träger aus Kunststoff mit Öffnungen, der nach dem Verschließen der Öffnungen in einer Form mit Mehrkomponentenkunststoff, insbesondere Polyurethan, hinterschäumt und mit einer Dekorfolie versehen wird, arbeitet mit einer Abdeckfolie 4, die auf die Rückseite des Trägers aufgelegt und durch Anlegen von Vakuum befestigt wird. Die Rückseite ist diejenige Seite, die dem Aufschäumraum abgekehrt ist. Der auf diese Weise durch Ansaugen und Befestigen der Abdruckfolie vorbereitete Träger wird in die Oberform 6 eingelegt und dort durch Vakuum gehalten. Die Abdeckfolie ist so gestaltet und weist entsprechende Eigenschaften auf, daß der Träger in der Oberform gehalten wird. In die Unterform wird nach dem Einlegen einer Dekorfolie das aufzuschäumende Material eingebracht. Die Form wird dann verschlossen, so daß das Aufschäumen stattfinden kann. Schließlich wird der fertige Formling aus der geöffneten Form entnommen. Die Abdeckfolie wird von dem fertigen Formling abgezogen, der dann praktisch fertig ist.

## Beschreibung

Die Erfindung betrifft ein Verfahren nach dem Oberbegriff des Anspruches 1 sowie eine Vorrichtung zur Durchführung eines derartigen Verfahrens.

Kompliziertere und größere Fahrzeuginnenteile wie Instrumententafeln oder Mittelkonsolen weisen einen vorher aus Kunststoff gespritzten Träger oder Einleger auf, der mit Öffnungen ausgerüstet ist, die während des Hinterschäumens geschlossen und anschließend wieder geöffnet und bearbeitet werden müssen. Bei den bekannten Verfahren bedeutet diese Arbeitsweise einen erhöhten Material- und Arbeitseinsatz.

Es ist auch schon vorgeschlagen worden, den Träger auf der Unterseite, d.h. auf der Seite, auf der das Aufschäumen erfolgt mit einer sogenannten Surlyn-Folie abzudichten. Diese Folie ist besonders teuer und ihr Einsatz führt zu Unsicherheiten bei der Durchführung des Verfahrens, da es zu Haftungsfehlern führen kann.

Der Erfindung liegt nun die Aufgabe zugrunde, ein Verfahren der eingangs genannten Art zu schaffen, das zuverlässig und dennoch sehr wirtschaftlich arbeitet.

Dieses Verfahren wird durch das Kennzeichen des Anspruches 1 grundsätzlich gelöst.

Erfindungsgemäß wird eine Abdeckfolie auf die Rückseite des Trägers, d.h. auf die Seite aufgebracht, die dem Hinterschäumen abgekehrt ist. Die Folie muß so stark sein und entsprechende Eigenschaften aufweisen, daß sie beim Ansaugen in der Oberform die entsprechende Ansaugkraft überträgt, damit der Träger mit der Abdeckfolie in der Oberform gehalten wird. Wenn dann das Hinterschäumen erfolgt ist und das Formteil aus der Form entnommen wurde, wird die Abdeckfolie wieder entfernt. Die Öffnungen und die Ränder sind dann ohne Schwierigkeiten zugänglich.

In vorteilhafter Weise wird das Verfahren so durchgeführt, wie in Anspruch 2 angegeben. Durch den Überstand der Abdeckfolie wird ein Eindringen von Kunststoffschaum im Randbe- reich verhindert.

Hierdurch ist es auch möglich (siehe Anspruch 3), die aufblasbaren Dichtungen in der Oberform anzuordnen. Durch die Abdeckfolie werden diese geschützt. Der Einsatz von Trennmitteln kann entfallen.

Als Abdeckfolie hat sich bei Versuchen eine solche bewährt, wie sie in der Lebensmittelindustrie zum Einsatz kommt.

Im folgenden wird die Erfindung unter Hinweis auf die Zeichnung näher erläutert.

Es zeigt:
- Fig. 1: eine Aufnahme mit Vakuumkammer für den Träger oder Einleger;
- Fig. 2: eine der Fig. 1 entsprechende Ansicht, jedoch mit aufgelegter und durch Anlegen von Vakuum geformter und befestigter Abdeckfolie;
- Fig. 3: einen schematischen Schnitt durch die Oberform der Vorrichtung mit angesaugtem Träger mit Abdeckfolie;
- Fig. 4: einen der Fig. 3 entsprechenden schematischen Schnitt, jedoch mit der Oberform, aufgesetzt auf die Unterform nach dem Eingeben des Schaummateriales, d.h. in Schließstellung der Form;
- Fig. 5: einen Schnitt durch einen unmittelbar aus der Form entnommenen Formling; und
- Fig. 6: eine der Fig. 5 entsprechenden Schnitt, jedoch beim Abnehmen der Abdeckfolie.

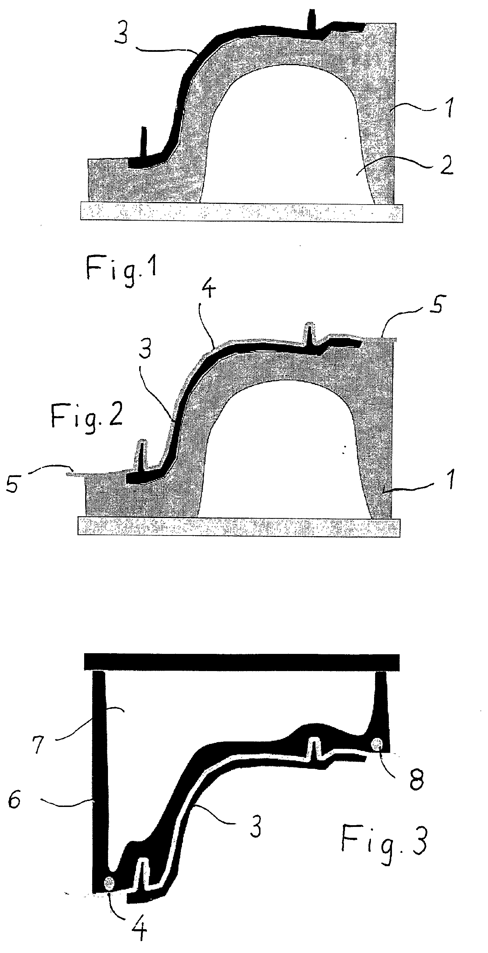

In Fig. 1 ist eine Aufnahme 1 mit einer Vakuumkammer dargestellt, auf die ein Träger oder Einleger 3 aufgelegt ist. Durch Anlegen von Vakuum wird durch entsprechende Öffnungen eine Abdeckfolie 4 geformt und angesaugt, wie es der Fig. 2 zu entnehmen ist.

Nach dem Befestigen der Abdeckfolie auf diese Weise wird der Träger 3 mit der Abdeckfolie 4 in die Oberform 6 (Fig. 3) mit Vakuumkammer 7 eingelegt und durch Anlegen von Vakuum gehalten. Aufblasbare Dichtungen in der Oberform sind mit 8 bezeichnet.

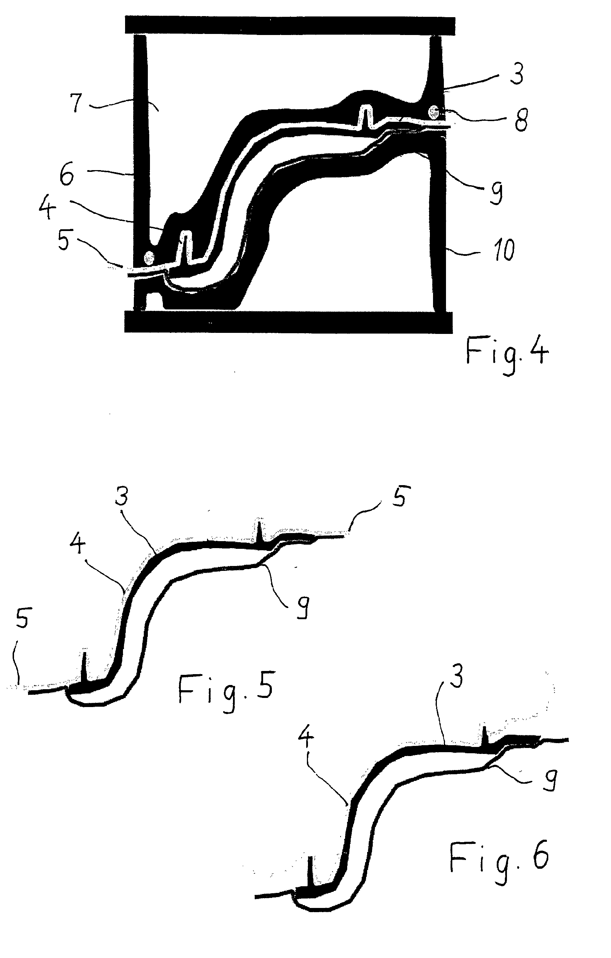

In die Unterform, die in Fig. 4 dargestellt und mit 10 bezeichnet ist, wird eine Dekorfolie 9 eingelegt. Vor dem Aufsetzen der Oberform wird der aufschäumende Mehrkomponentenkunststoff eingebracht. Die Form wird dann verschlossen, so daß das Aufschäumen stattfinden kann. Wenn dieses beendet ist, kann die Form geöffnet und der Formling entnommen werden. Er sieht dann so aus, wie in Fig. 5 dargestellt. An den Rändern steht die Abdeckfolie über, um in diesen Randbereich ein Eindringen von aufschäumenden Kunststoff in die Form und entsprechende Verschmutzungen zu verhindern. Auch die aufblasbaren Dichtungen 8 werden hierdurch geschützt.

Schließlich wird die Abdeckfolie wie in Fig. 6 angedeutet, entfernt. Der Formling ist dann praktisch fertig. Gegebenenfalls muß er an den Rändern noch beschnitten werden. Ein weiteres Nacharbeiten ist grundsätzlich nicht erforderlich.

## Patentansprüche

1. Verfahren zum Herstellen von Fahrzeuginnenteilen mit einem Träger (Einleger aus Kunststoff) mit Öffnungen, der nach dem Verschließen der Öffnungen in einer Form mit Mehrkomponentenkunststoff, insbesondere Polyurethan hinterschäumt und mit einer Dekorfolie versehen wird, dadurch gekennzeichnet, daß die Öffnungen in dem Träger (3) durch eine Abdeckfolie (4) verschlossen wird, die auf die Rückseite des Trägers aufgelegt und durch Anlegen von Vakuum an der Unterseite angesaugt wird,
woraufhin der Träger mit der oben liegenden Abdeckfolie (4) in die Oberform (6) eingelegt und durch Anlegen von Vakuum gehalten wird,
in die Unterform (10) mit der eingelegten Dekorfolie (9) der aufschäumende Mehrkomponentenkunststoff eingegeben und anschließend die Form verschlossen wird und schließlich die Abdeckfolie (4) nach Entnahme des Formlings aus der geöffneten Form abgezogen wird.

2. Verfahren nach Anspruch 1, dadurch gekennzeichnet, daß die Abdeckfolie (4) mit einem seitlichen Überstand (5) auf die Rückseite des Trägers (3) aufgelegt wird.

3. Vorrichtung zur Durchführung des Verfahrens 1 mit aufblasbaren Dichtungen in der Form, dadurch gekennzeichnet, daß die aufblasbaren Dichtungen (8) in der Oberform (6) angeordnet sind.
